# EUROPEAN PATENT APPLICATION

(11) **EP 2 669 551 A2**
(43) Date of publication of application: **04.12.2013**
(21) Application number: 12193758.5
(22) Date of filing: 22.11.2012
(51) Int. Cl.: F16H 63/18, F16H 61/688, F16H 61/32, F16H 3/093, F16H 63/02

(54) **Shifting apparatus of dual clutch transmission mechanism**

(30) Priority: 29.05.2012 KR 20120056929
(71) Applicant: Sol-Tech Co., Ltd., Hwaseong-si, Gyeonggi-do 445-902 (KR)
(72) Inventor: Kim, Han Sool, 427-708 Gyeonggi-do (KR)
(74) Representative: Hano, Christian

(57) **Abstract**

Provided is a shifting apparatus of a dual clutch transmission, including: a plurality of drive gears mounted onto a first input shaft (13; 213) or a second input shaft (14; 214) of dual clutches (11, 12; 211, 212); a plurality of transmission gears meshing with the drive gears, respectively, and each mounted onto a first support shaft (15; 215) or a second support shaft (16; 216); a plurality of synchronizers (S1-S4) positioned between the transmission gears and each slidably mounted onto the first support shaft or the second support shaft; a plurality of shift forks (51-54; 251-254) connected to the synchronizers and each having a follower pin (51a-54a; 251a-254a); and a dual cam mechanism (60; 260) connected to the follower pins of the shift forks to move the shift forks by rotation so that the synchronizers slidably move to be engaged with the transmission gears along the first support shaft or the second support shaft.

## Description

### BACKGROUND

### 1. Field of the Invention

The present invention relates to a shifting apparatus of a dual clutch transmission, and more particularly, to a shifting apparatus of a dual clutch transmission that may enhance reliability of an operation when performing a shift control and durability of a product.

### 2. Description of the Related Art

A dual clutch transmission (DCT) has aspects in that power loss is small, manipulation is easy, and a transmission time is fast, such as a manual transmission. In a gearshift method using the DCT, based on an assumption that a gear to 1 speed through 6 speed can be shifted, when number 1 clutch is driving at 1 speed, number 2 clutch is waiting in a state where it has shifted to 2 speed. When gearshift starts, power of the number 1 clutch is suspended and the number 2 clutch is connected. When drive at speed 2 starts, the number 1 clutch has shifted gear to 3 speed, omitting gear to 1 speed. Accordingly, it only needs to wait for clutch connection for a subsequent gearshift. Due to the above characteristic, the DCT has a fast transmission time and the transmission time of the DCT is further short even compared to a manual transmission.

The Korean Patent Laid-Open Publication No. 2011-0049661 (patent document 1), published on May 12, 2010, discloses a shifting apparatus of a DCT in which the shifting apparatus employs a single barrel cam assembly, and the barrel cam assembly includes a cylindrical passage opening, a first cam track, a second cam track, and a rotary barrel cam. The barrel cam assembly used in the shifting apparatus of the DCT disclosed in the prior art forms the first cam track and the second cam track on the rotary barrel cam, and in each, a cam follower of a first shift fork body and a cam follower of a second shift fork body are combined with each other to thereby move a first or second shift fork body. Through this, gearshift operation is performed.

### SUMMARY

In a shifting apparatus of a conventional dual clutch transmission, a groove is formed on the periphery of a barrel cam and a plurality of cam tracks is formed on the groove. Through this, when impact is transferred to one of cam followers that are guided by a first cam track or a second track and thereby moved, the impact may also be transferred to other cam followers. When the impact is transferred to a cam follower, the cam follower may rock from the first cam track or the second cam track due to the transferred impact. Accordingly, durability of the shifting apparatus of dual clutch transmission or reliability of an operation when performing a shift operation may be degraded.

Also, in the shifting apparatus of the conventional dual clutch transmission, only a single follower pin of a follower pin is inserted in a cam track and thus, a size of the shifting apparatus of the dual clutch transmission may overall increase. In addition, it may be difficult to cope with a position change of the shifting apparatus and a size limit thereof.

A first object of the present invention is conceived to solve the aforementioned issues and thus, provides a shifting apparatus of a dual clutch transmission that may form, on a hollow cylindrical member, a first cam member formed with a first cam channel and a second cam member formed with a second cam channel to be spaced apart from each other, and may prevent impact transferred to one of them from being transferred to a remaining cam member, thereby enhancing reliability of operation when performing a shift control and also enhancing durability of a product.

A second object of the present invention also provides a shifting apparatus of a dual clutch transmission that may insert at least one follower pin into first and second cam members or first and second cam channels of a cylindrical cam member and thereby reduce the overall size of the shifting apparatus and may also readily change an installation position of a shift fork by rotating a cam.

A third object of the present invention also provides a shifting apparatus of a dual clutch transmission that may satisfy various types of gear arrangements of the dual clutch transmission and may also be readily installed even in a narrow space.

According to an aspect of the present invention, there is provided a shifting apparatus of a dual clutch transmission, including: a plurality of drive gears inserted into a first input shaft or a second input shaft of dual clutches; a plurality of transmission gears synchronized with the drive gears, respectively, and each inserted into a first support shaft or a second support shaft; a plurality of synchronizers positioned between the transmission gears, and each slidably inserted into the first support shaft or the second support shaft; a plurality of shift forks connected to the synchronizers and follower pin, respectively; and a dual cam mechanism connected to the follower pin of the shift forks to move the shift forks by rotation so that the synchronizers slidably move to be engaged with the transmission gears along the first support shaft or the second support shaft.

According to another aspect of the present invention, there is provided a shifting apparatus of a dual clutch transmission, including: one or more transmission pairs spaced apart from each other, and a synchronizer disposed between the one or more transmission gear pairs; at least one shift fork, each having a follower pin; a cylindrical cam member having two cam channels, each receiving at least one follower pin of the shift fork; and a drive member bi-directionally rotating the cylindrical cam member,

### EFFECT

According to embodiments of the present invention, there may be provided a shifting apparatus of a dual clutch transmission that may form, on a hollow cylindrical member, a first cam member formed with a first cam channel and a second cam member formed with a second cam channel to be spaced apart from each other and may prevent impact transferred to one of them from being transferred to a remaining cam member, thereby enhancing reliability of operation when performing a shift control and also enhancing durability of a product.

According to embodiments of the present invention, there may be provided a shifting apparatus of a dual clutch transmission that may adjustably use pitches of first and second cam members and thus, may be readily manufactured by freely changing an installing position of a shift fork.

According to embodiments of the present invention, there may be provided a shifting apparatus of a dual clutch transmission that may insert two follower pins of different shift forks into cam channels of a hollow cylindrical cam member and thus, may reduce a size and the overall size of the shifting apparatus of the dual clutch transmission.

According to embodiments of the present invention, there may be provided a shifting apparatus of a dual clutch transmission that may decrease a magnitude of stress loaded to follower pins due to a plurality of holes formed on both sides of a cylindrical cam member and thereby may guarantee smooth rotation of a cam and also decrease load of a motor.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a perspective view of a dual clutch transmission according to an embodiment of the present invention;
FIG. 2 is an exploded perspective view of a shifting apparatus of the dual clutch transmission of FIG. 1;
FIG. 3 is a gear arrangement view of the dual clutch transmission of FIG. 1;
FIG. 4 is an enlarged perspective view of the dual clutch transmission of FIG. 2;
FIG. 5 is a developed view of a first cam member and a second cam member of FIG. 4;
FIG. 6 is a table showing a position of a synchronizer of FIG. 2;
FIGS. 7 through 15 are timing charts of the first cam member and the second cam member of FIG. 4;
FIG. 16 is a gear arrangement diagram of a dual clutch transmission according to another embodiment of the present invention;
FIG. 17 is an exploded perspective view of a shifting apparatus of a dual clutch transmission according to another embodiment of the present invention;
FIG. 18 is a table showing a position of a synchronizer of FIG. 17;
FIG. 19 is a perspective view illustrating a cylindrical cam member that is a major component according to another embodiment of the present invention; and
FIGS. 20 through 28 are timing charts of the cylindrical cam member of FIG. 19.

### DETAILED DESCRIPTION

Reference will now be made in detail to exemplary embodiments of the present invention, examples of which are illustrated in the accompanying drawings, wherein like reference numerals refer to the like elements throughout. A shifting apparatus of a dual clutch transmission according to embodiments of the present invention will be described below to explain the present invention by referring to the figures.

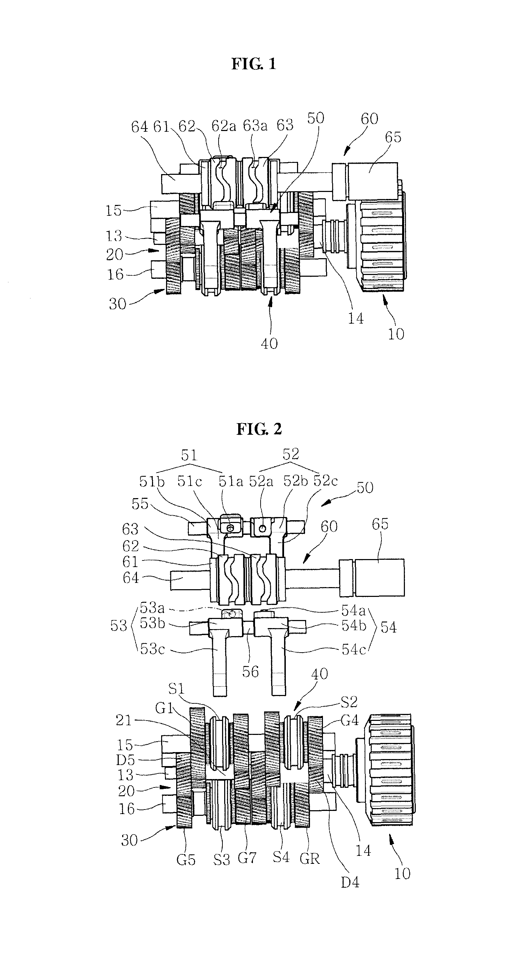

As shown in FIGS. 1 through 3, a dual clutch transmission employing a shifting apparatus according to an embodiment of the present invention may include dual clutches 10, a drive gear unit 20, a transmission gear unit 30, a synchronizer unit 40, a shift fork unit 50, and a dual cam mechanism 60.

The dual clutches 10 receive rotation force generated from an engine (not shown) through a first clutch 11 or a second clutch 12, and selectively transfer the rotation force to a first input shaft 13 or a second input shaft 14. The dual clutches 10 are configured to selectively transfer the rotation force to the first input shaft 13 or the second input shaft 14 by controlling an oil pressure. The above configuration may employ a known technology and thus, a further detailed description will be omitted.

The drive gear unit 20 includes a plurality of drive gears (D1, D2, D3, D4, D5, D6, D7, DR), and each is inserted into the first input shaft 13 or the second input shaft 14 of the dual clutches 10. The transmission gear unit 30 includes a plurality of transmission gears (G1, G2, G3, G4, G5, G6, G7, GR), which is synchronized with the drive gears (D1, D2, D3, D4, D5, D6, D7, DR), respectively, and each is inserted into a first support shaft 15 or a second support shaft 16. The synchronizer unit 40 includes the plurality of synchronizers (S1, S2, S3, S4), which is positioned between the respective transmission gears (G1, G2, G3, G4, G5, G6, G7, GR), and each slidably moves to be inserted into the first support shaft 15 or the second support shaft 16. The shift fork unit 50 includes a plurality of shift forks 51, 52, 53, and 54, which is connected to the synchronizers (S1, S2, S3, S4) and has follower pins 51a, 52a, 53a, and 54a, respectively. The dual cam mechanism 60 is connected to the follower pin 51a, 52a, 53a, and 54a of the shift forks 51, 52, 53, and 54 to move the shift forks 51, 52, 53, and 54 by rotation of the cam, so that the synchronizers (S1, S2, S3, S4) slidably move along the first support shaft 15 or the second support shaft 16 to be engaged with the transmission gears (G1, G2, G3, G4, G5, G6, G7, GR).

Hereinafter, a configuration of a shifting apparatus of a dual clutch transmission according to embodiments of the present invention will be further described with reference to the accompanying drawings.

As shown in FIGS. 1 through 3, the dual clutches 10 include the first clutch 11, the second clutch 12, the first input shaft 13, and the second input shaft 14. The dual clutches 10 receives the rotation force generated from the engine (not shown) through the first clutch 11 or the second clutch 12, and selectively transfers the rotation force to the first input shaft 13 or the second input shaft 14. The dual clutches 10 are configured to selectively transfer the rotation force to the first input shaft 13 or the second input shaft 14 by controlling an oil pressure. The above configuration may employ a known technology and thus, a further detailed description will be omitted.

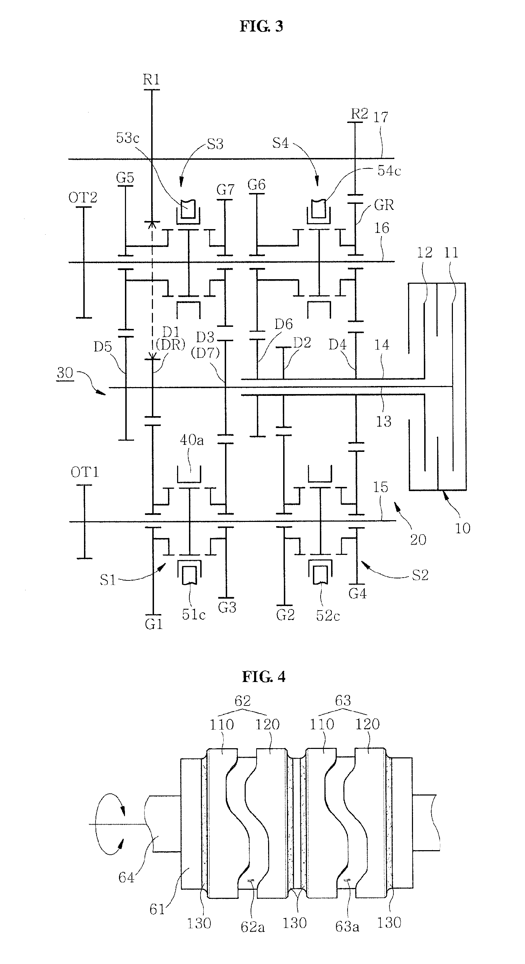

As shown in FIGS. 2 and 3, the plurality of drive gears (D1, D2, D3, D4, D5, D6) of the drive gear unit 20 includes a first drive gear (D1), a second drive gear (D2), a third drive gear (D3), a fourth drive gear (D4), a fifth drive gear (D5), and a sixth drive gear (D6).

The first drive gear (D1) is inserted into the first input shaft 13 that is connected to the first clutch 11 of the dual clutches 10, and rotates by rotation of the first input shaft 13. The second drive gear (D2) is inserted into the second input shaft 14, connected to the second clutch 12, to be positioned on one side of the first drive gear (D1), and rotates by rotation of the second input shaft 14. The third drive gear (D3) is inserted into the first input shaft 13 to be positioned between the first drive gear (D1) and the second drive gear (D2), and rotates by rotation of the first input shaft 13. The fourth drive gear (D4) is inserted into the input shaft 14 to be positioned on one side of the second drive gear (D2), and rotates by rotation of the second input shaft 14. The fifth drive gear (D5) is inserted into the first input shaft 13 to be positioned on another side of the first drive gear (D1), and rotates by rotation of the first input shaft 13. The sixth drive gear (D6) is inserted into the second input shaft 14 to be positioned between the second drive gear (D2) and the third drive gear (D3), and rotates by rotation of the second input shaft 14.

Each of the first drive gear (D1), the second drive gear (D2), the third drive gear (D3), the fourth drive gear (D4), the fifth drive gear (D5), and the sixth drive gear (D6) has a different gear ratio, and the first drive gear (D1) and the third drive gear (D3) are synchronized with the transmission gears (G1, G3, G7, GR) having different gear ratios on one end and another end thereof and thereby connected thereto. Each of the first drive gear (D1), the second drive gear (D2), the third drive gear (D3), the fourth drive gear (D4), the fifth drive gear (D5), and the sixth drive gear (D6) has a different gear ratio.

As shown in FIGS. 2 and 3, the transmission gear unit 30 includes the plurality of transmission gears (G1, G2, G3, G4, G5, G6, G7, GR), the first support shaft 15, and the second support shaft 16. The plurality of transmission gears (G1, G2, G3, G4, G5, G6, G7, GR) includes a first transmission gear (G1), a second transmission gear (G2), a third transmission gear (G3), a fourth transmission gear (G4), a fifth transmission gear (G5), a sixth transmission gear (G6), a seventh transmission gear (G7), and a reverse transmission gear (GR).

The first transmission gear (G1) is inserted into the first support shaft 15 and synchronized with the first drive gear (D1) and thereby connected thereto, and the second transmission gear (G2) is inserted into the first support shaft 15 to be positioned on one side of the first transmission gear (G1), and synchronized with the second drive gear (D2) and thereby connected thereto. The third transmission gear (G3) is inserted into the first support shaft 15 to be positioned between the first transmission gear (G1) and the second transmission gear (G2), and synchronized with the third drive gear (D3) and thereby connected thereto, and the fourth transmission gear (G4) is synchronized with the fourth drive gear (D4) to be positioned on one side with the second transmission gear (G2) and thereby connected thereto. The fifth transmission gear (G5) is inserted into the second support shaft 16 that is disposed to face the first support shaft 15, and synchronized with the fifth drive gear (D5) and thereby connected thereto, and the sixth transmission gear (G6) is inserted into the second support shaft 16 to be positioned on one side of the fifth transmission gear (G5) and synchronized with the sixth drive gear (D6) and thereby connected thereto. The seventh transmission gear (G7) is inserted into the second support shaft 16 to be positioned between the fifth transmission gear (G5) and the sixth transmission gear (G6), and synchronized with the third drive gear (D3) and thereby connected thereto, and the reverse transmission gear (GR) is inserted into the second support shaft 16 to be positioned on one side of the sixth transmission gear (G6), and synchronized with the first drive gear (D1) and thereby connected thereto.

As shown in FIGS. 2 and 3, the synchronizer unit 40 includes the plurality of synchronizers (S1, S2, S3, S4), and the plurality of synchronizers (S1, S2, S3, S4) includes a first synchronizer (S1), a second synchronizer (S2), a third synchronizer (S3), and a fourth synchronizer (S4).

The first synchronizer (S1) is inserted into the first support shaft 15 to be positioned between the first transmission gear (G1) and the third transmission gear (G3), and slidably moves along the first support shaft 15 by the first shift fork 51 among the plurality of shift forks 51, 52, 53, and 54 to be selectively engaged with the first transmission gear (G1) and the third transmission gear (G3). The second synchronizer (S2) is inserted into the first support shaft 15 to be positioned on one side of the first synchronizer (S1), and slidably moves along the first support shaft 15 by the second shift fork 52 among the plurality of shift forks 51, 52, 53, and 54 to be selectively engaged with the second transmission gear (G2) or the fourth transmission gear (G4). The third synchronizer (S3) is inserted into the second support shaft 16 to face the first synchronizer (S1), and slidably moves along the second support shaft 16 by the third shift fork 53 among the plurality of shift forks 51, 52, 53, and 54 to be selectively engaged with the fifth transmission gear (G5) or the seventh transmission gear (G7). The fourth synchronizer (S4) is inserted into the second support shaft 16 to be positioned on one side of the third synchronizer (S3), and slidably moves along the second support shaft 16 by the fourth shift fork 54 among the plurality of shift forks 51, 52, 53, and 54 to be selectively engaged with the sixth transmission gear (G6) or the reverse transmission gear (GR). Each of the above first through fourth synchronizers (S1, S2, S3, S4) includes a clutch gear, a sink hub, a sink-ring, and a sleeve (reference numeral not indicated) having an engaging groove 40a (see FIG. 3). Each configuration may employ a known technology and thus, a further detailed description will be omitted here.

As shown in FIGS. 2 and 3, the shift fork unit 50 includes the first through fourth shift forks 51, 52, 53, and 54, and may further include a first guide shaft 55 and a second guide shaft 56.

The first guide shaft 55 and the second guide shaft 56 are mounted on one side and another side of the dual cam mechanism 60, respectively. The first shift fork 51 is connected to each of one side of the first cam member 62 and the first synchronizer S1 to move along the first guide shaft 55, so that the first synchronizer S1 may slidably move along the first support shaft 15. The second shift fork 52 is connected to each of one side of the second cam member 63 and the second synchronizer S2 to move along the first guide shaft 55, so that the second synchronizer S2 may slidably move along the first support shaft 15. The third shift fork 53 is connected to each of another side of the first cam member 62 and the third synchronizer S3 to move along the second guide shaft 56, so that the third synchronizer S3 may slidably move along the second support shaft 16. The fourth shift fork 54 is connected to each of another side of the second cam member 63 and the fourth synchronizer S4 to move along the second guide shaft 56, so that the fourth synchronizer S4 may slidably move along the second support shaft 16.

The first shift fork 51, the second shift fork 52, the third shift fork 53, and the fourth shift fork 54 include the follower pins 51a, 52a, 53a, and 54a, moving blocks 51b, 52b, 53b, and 54b, and fork members 51c, 52c, 53c, and 54c, respectively. The follower pins 51a, 52a, 53a, and 54a are formed on the moving blocks 51b, 52b, 53b, and 54b, respectively, and thereby are connected to a first cam channel 62a or a second cam channel 63a, whereby the fork members 51c, 52c, 53c, and 54c move along the first guide shaft 55 or the second guide shaft 56 by rotation of the first cam member 62 or the second cam member 63. The moving blocks 51b, 52b, 53b, and 54b are integrally formed with the fork members 51c, 52c, 53c, and 54c, respectively, and thereby are inserted in to the first guide shaft 55 or the second guide shaft 56 to be slidably movable. The fork members 51c, 52c, 53c, and 54c are integrally formed with the moving blocks 51b, 52b, 53b, and 54b, and, respectively, to be extended therefrom, and thereby are engaged with the engaging grooves 40a (see FIG. 3) formed on the sleeves of the first through fourth synchronizers (S1, S2, S3, S4).

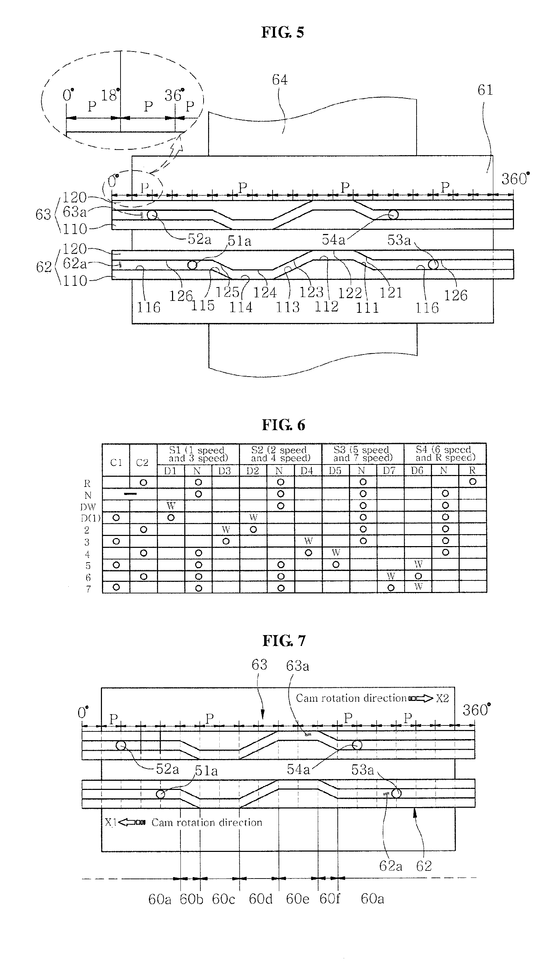

The respective follower pins 51a, 52a, 53a, and 54a of the first through fourth shift fork 51 through 54 are inserted into the first channel groove 62a of the first cam member 62 or the second channel groove 63a of the second cam member 63 and thereby connected thereto at two pitch distances (P: see FIGS. 5 and 6).

Here, the follower pins 51a and 53a, provided to the first and third shift fork 51 and 53, respectively, are inserted into the first channel groove 62a of the first cam member 62, and the follower pins 52a and 54a, provided to the second and fourth shift forks 52 and 54, respectively, are inserted into the second channel groove 63a of the second cam member 63. Follower pins, for example, the follower pins 51a and 53a or the follower pins 52a and 54a of two shift forks, for example, the first and third shift forks or the second and fourth shift forks, are inserted into the first and second channel grooves 62a and 63a of the first and second cam members 62 and 63, respectively. Therefore, compared to a shifting apparatus of a conventional dual clutch transmission in which only a single follower pin is inserted into a cam groove, it is possible to reduce a size of the cam and an installation space of shift forks.

As shown in FIG. 2 and FIGS. 4 through 6, the dual cam mechanism 60 includes a hollow cylindrical member 61, a first cam member 62, a second cam member 63, a rotation shaft 64, and a rotary driving source 65.

The hollow cylindrical member 61 generally supports the first cam member 62 and the second cam member 63. The first cam member 62 is formed with a first cam channel 62a that is inserted into the hollow cylindrical member 61 to guide the follower pins 51a and 53a. The second cam member 63 is formed with the second cam channel 63a that is inserted into the hollow cylindrical member 61 to guide the follower pins 52a and 54a, so as to be separated from the first cam member 62. The rotation shaft 64 is inserted into the hollow cylindrical member 61, and the rotary driving source 65 is connected to the rotation shaft 64 to rotate the hollow cylindrical member 61, thereby rotating the first cam member 62 and the second cam member 63 into a first direction or a second direction opposite to the first direction. Here, when the first direction corresponds to a clockwise direction, the second direction corresponds to a counterclockwise direction. When the first direction corresponds to the counterclockwise direction, the second direction corresponds to the clockwise direction.

As shown in FIG. 4, each of the first cam member 62 and the second cam member 63 includes a first hollow ring member 110 and a second hollow ring member 120.

The first hollow ring member 110 is inserted into the hollow cylindrical member 61, and second hollow ring member 120 is inserted into the hollow cylindrical member 61 to be spaced apart from the first hollow ring member 110, to thereby form the first cam channel 62a or the second cam channel 63a. Each of the first hollow ring member 110 and the second hollow ring member 120 is mounted to the hollow cylindrical member 61 to have further solid durability by forming a welding unit 130 after being inserted into the hollow cylindrical member 61. The welding unit 130 is formed between the first hollow ring member 110 and the hollow cylindrical member 61, and between the second hollow ring member 120 and the hollow cylindrical member 61 by welding. Here, welding may indicate bonding, but may be bonded using various methods depending on a user request.

The first inclined surface portions 111 and 121, the first horizontal surface portions 112 and 122, the second inclined surface portions 113 and123, the second horizontal surface portions 114 and124, the third inclined surface portions 115 and 125, and the third horizontal surface portions 116 and 126 are formed on the facing section of the first hollow ring member 110 and second hollow ring member 120, respectively.

The first inclined surface portions 111 and 121 are formed to be inclined into the first inclined direction, and the first horizontal surface portions 112 and122 are formed on the first inclined surface portions 111 and 121, respectively, to be extended into a horizontal direction. The second inclined surface portions 113 and 123 are formed on the first horizontal surface portions 112 and 122 to be extended into a second inclined direction opposite to the first inclined direction, and the second horizontal surface portions 114 and 124 are formed on the second inclined surface portions 113 and 123, respectively, to be extended into the horizontal direction. The third inclined surface portions 115 and 125 are formed on the second horizontal surface portions 114 and 124, respectively, to be extended into the first inclined direction, and the third horizontal surface portions 116 and 126 are formed between the third inclined surface portions 115 and 125, and between the first inclined surface portions 111 and 121, respectively, to form the first cam channel 62a or the second cam channel 63a. Here, the first inclined surface portions 111 and 121, and the third inclined surface portions 115 and 125 have the identical length, and the second inclined surface portions 113 and 123 are formed to have a length longer than the first inclined surface portions 111 and 121, or the third inclined surface portions 115 and 125. That is, while the second inclined surface portions 113 and 123 are set to a length of two pitch distances (P), the first inclined surface portions 111 and 121, or the third inclined surface portions 115 and 125 are set to a length of a single pitch distance (P). The pitch distance (P) may be set to be different depending on a user request. As described above, by processing and assembling the first hollow ring member 110 and the second hollow ring member 120 to be in the same shape, it is possible to readily process and assemble the first cam member 62 and the second cam member 63.

Each of the first cam member 62 and the second cam member 63 of the dual cam mechanism 60 is divided into a plurality of pitch distances (P) having the same interval. The plurality of pitch distances (P) may be a total of 20 pitch distances (P) by dividing the periphery of the first cam member 62 or the second cam member 63 at 18 degrees of an arc angle based on a rotation center shaft. Each of the first cam member 62 and the second cam member 63 is rotated at the pitch distances (P) by the rotary driving source 65 to shift the follower pins 51a, 52a, 53a, and 54a of the plurality of shift forks 51, 52, 53, and 54, thereby enabling the synchronizers (S1, S2, S3, S4) to be selectively engaged with the transmission gears (G1, G2, G3, G4, G5, G6, G7, GR).

Each of the first cam channel 62a of the first cam member 62 and the second cam channel 63a of the second cam member 63 of the dual cam mechanism 60 includes a neutral channel groove 60a, a first inclined channel groove 60b, a first parallel channel groove 60c, a first shift channel groove 60d, a second parallel channel groove 60e, and a second inclined channel groove 60f, thereby shifting the follower pins 51a, 52a, 53a, and 54a through the channel.

The neutral channel groove 60a of the first cam channel 62a of the first cam member 62 is formed along the center of the periphery of the first cam member 62, and the first inclined channel groove 60b is extended from the neutral channel groove 60a. The first parallel channel groove 60c is extended from the first inclined channel groove 60b, the first shift channel groove 60d is extended from the first parallel channel groove 60c, and the second parallel channel groove 60e is extended from the first shift channel groove 60d. The second inclined channel groove 60f is formed between the second parallel channel groove 60e and the neutral channel groove 60a.

The neutral channel groove 60a of the second cam channel 63a of the second cam member 63 is formed along the center of the periphery of the second cam member 63, and the first inclined channel groove 60b is extended from the neutral channel groove 60a. The first parallel channel groove 60c is extended from the first inclined channel groove 60b, the first shift channel groove 60d is extended from the first parallel channel groove 60c, and the second parallel channel groove 60e is extended from first shift channel groove 60d. The second inclined channel groove 60f is formed between the second parallel channel groove 60e and the neutral channel groove 60a.

The neutral channel groove 60a provided to each of the first cam channel 62a and the second cam channel 63a is formed at 12 pitch distances (P), and each of the first inclined channel groove 60b and the second inclined channel groove 60f is formed at a single pitch distance (P). Each of the first parallel channel groove 60c, the first shift channel groove 60d, and the second parallel channel groove 60e is formed at two pitch distances (P). The first inclined channel groove 60b and the second inclined channel groove 60f, provided to the first cam channel 62a and the second cam channel 63a, respectively, are formed at a single pitch distance (P) in the same direction, and the first shift channel groove 60d is formed at pitch distances (P) in a different direction.

A dual clutch transmission applied with a shifting apparatus of a dual clutch transmission according to another embodiment of the present invention includes a dual clutches 210, a drive gear unit 220, a transmission gear unit 230, a synchronizer unit 240, a shift fork unit 250, and a dual cam mechanism 260.

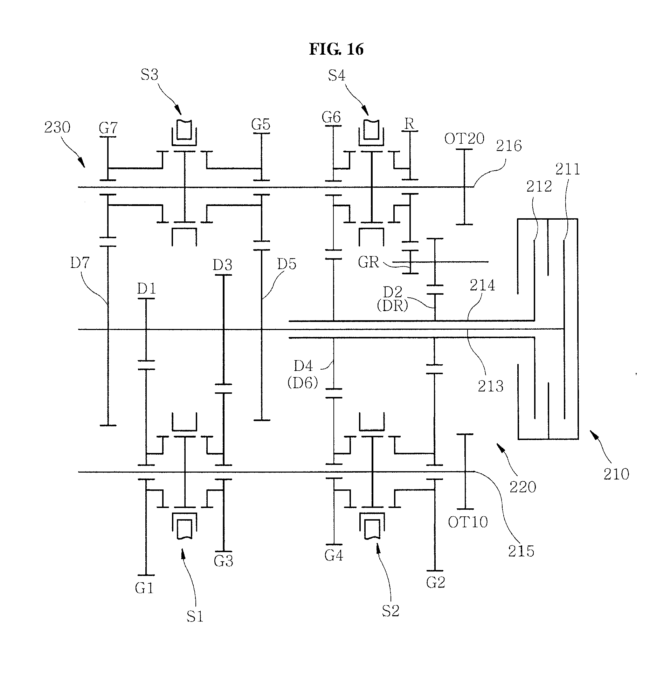

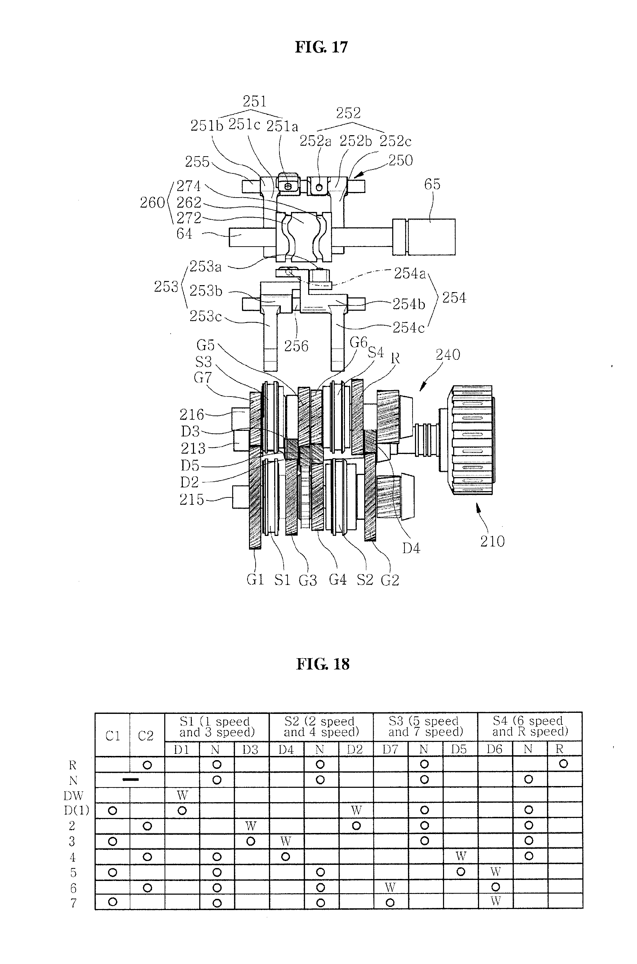

As shown in FIGS. 16 and 17, the dual clutches 210 includes a first clutch 211, a second clutch 212, a first input shaft 213, and a second input shaft 214. The dual clutches 210 include a first input shaft 213, a second input shaft 214 rotating together with the first input shaft 213, while surrounding the same with the same shaft, and a first support shaft 215 and a second support shaft 216 disposed to be in parallel with the first and input shafts 213 and 214.

The first and second input shafts 213 and 214 are respectively connected to the first and second clutches 211 and 212 of the dual clutches 210 that are rotatably driven by an engine (not shown) using a drive shaft, and thereby are rotatably driven.

As shown in FIGS. 16 and 17, the drive gear unit 220 includes a plurality of drive gears (D1, D2, D3, D4, D5, D6, D7, DR), and each is inserted into the first input shaft 213 or the second input shaft 214 of the dual clutches 210. Each of a first drive gear (D1), a second drive gear (D2), a third drive gear (D3), a fourth drive gear (D4), a fifth drive gear (D5), and a seventh drive gear (D7) has a different gear ratio, and the second drive gear (D2) and the fourth drive gear (D4) are synchronized with the transmission gears (G2, G4, G6, GR) having different gear ratios, on one end and another end thereof, and thereby connected thereto. To meet a user request, an appropriate gear ratio may be selected as the gear ratio.

The transmission gear unit 230 includes a plurality of transmission gears (G1, G2, G3, G4, G5, G6, G7, GR), which is synchronized with the drive gears (D1, D2, D3, D4, D5, D6, D7, DR), respectively, and thereby inserted into the first support shaft 215 or the second support shaft 216.

Similar to the aforementioned embodiment, the synchronizer unit 240 includes the plurality of synchronizers (S1, S2, S3, S4), each positioned between the respective transmissions (G1, G2, G3, G4, G5, G6, G7, GR), and inserted into the first support shaft 215 or the second support shaft 216 to be slidably movable. The shift fork unit 250 includes first through fourth shift forks 251, 252, 253, and 254. The first through fourth shift forks 251, 252, 253, and 254 are inserted into the first and second guide shafts 255 and 256. The first and second guide shafts 255 and 256 are mounted on one side and another side of the dual cam mechanism 260, respectively. In individual connection relationships of the first through fourth shift fork 251, 252, 253, and 254 of the shift fork unit 250, structures and installation relationships of the first and second shift fork 251 and 252, as shown in FIG. 17, are similar to those of the first and second shift forks 51 and 52 of the aforementioned embodiment, but the configuration of the third and fourth shift forks 253 and 254 is different from the aforementioned embodiment.

The third and fourth shift fork 253 and 254 are integrally formed with third and fourth fork members 253c and 254c, respectively, since a configuration of moving block 253b and 254b in which the follower pins 253a and 254a are formed is provided in a curved frame form. The moving blocks 253b and 254b are integrally formed with the fork members 253c and 254c, respectively, and inserted into the second guide shaft 256 to be slidably movable. Also, the follower pin 253a installed in the moving block 253b of the third shift fork 253 is inserted into a second cam channel 274, and the follower pin 254a installed in the moving block 254b of the fourth shift fork 254 is inserted into a first cam channel 272.

Meanwhile, the moving blocks 251b and 252b are integrally formed with the fork members 251c and 252c, respectively, and thereby inserted into the first guide shaft 255 to be slidably movable. The follower pin 251a installed in the moving block 251b of the first shift fork 251 is inserted into the first cam channel 272, and the follower pin 252a installed in the moving block 252b of the second shift fork 252 is inserted into the second cam channel 274. The fork members 251 and 251c of the first and second shift fork 251 and 252 are formed to have a configuration nearly similar to the aforementioned embodiment.

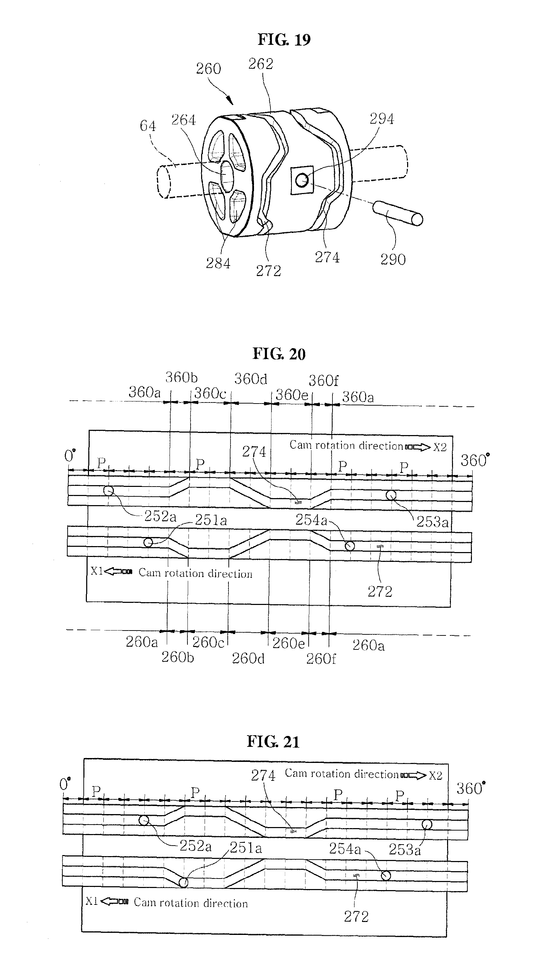

As shown in FIG. 19, the dual cam mechanism 260 includes a cylindrical cam member 262 having first and second cam channels 272 and 274, a rotation shaft 64 inserted into the cylindrical cam member 262, and a rotary driving source 65.

As shown in FIG. 19, the cylindrical cam member 262 includes a through hole 264 formed to insert the rotation shaft 64 into the center and a plurality of polygonal holes 284 formed on the periphery of the through hole 264 at predetermined intervals. The plurality of polygonal holes 284 is formed to decrease a magnitude of stress loaded to the follower pins 251a, 252a, 253a, and 254a of the cylindrical cam member 262, thereby smoothing the rotation of the cylindrical cam member 262 and decreasing load of the rotary driving source 65. Also, at least one pin hole 294 is formed on the periphery of the cylindrical cam member 262 for zero-adjustment of the rotation shaft 64. Here, even though two pin holes 294 are applied, at least two pin holes 294 may be applied for more accurate adjustment. A pin 290 is inserted into the pin hole 294 to perform zero adjustment.

As shown in FIG. 17, two follower pins 251a and 254a or 252a and 253a of different two shift forks among the first through fourth shift forks 251, 252, 253, and 254 are inserted into the first and second cam channels 272 and 274 of the cylindrical cam member 262. That is, gearshift to 7 speed is configured to insert two follower pins 251a and 254a, or 252a and 253a into the first and second cam channels 272 and 274. Accordingly, two follower pins are inserted into two cam channels 272 and 274.

Meanwhile, in the case of gearshift to 5 speed, even though not illustrated here; three shift forks, for example, first through third shift forks are applied and thus, each of follower pins of two different shift forks is inserted into a single cam channel and a follower pin of a remaining shift fork is inserted into another single cam channel. Similar to the aforementioned embodiment, a single rotary driving source 65 is applied and thus, a detailed description will be omitted here.

Hereinafter, an operational relationship of a shifting apparatus of a dual clutch transmission according to an embodiment of the present invention will be described.

As shown in FIGS. 7 through 15, a gearshift of a shifting apparatus of a dual clutch transmission according to an embodiment of the present invention includes a neutral (N), a driving waiting state (D-W), 1 speed to 7 speed, and reverse (R).

As shown in FIG. 7, in neutral (N), follower pins 51a, 52a, 53a, and 54a of the first through fourth shift forks 51, 52, 53, and 54 provided to the first through fourth synchronizers (S1, S2, S3, S4), respectively, are shifted to the neutral channel groove 60a of the first cam channel 62a of the first cam member 62 or the second cam channel 63a of the second cam member 63, whereby the first through seventh transmission gears (G1, G2, G3, G4, G5, G6, G7) and the reverse transmission gear (GR) become to be in a neutral state.

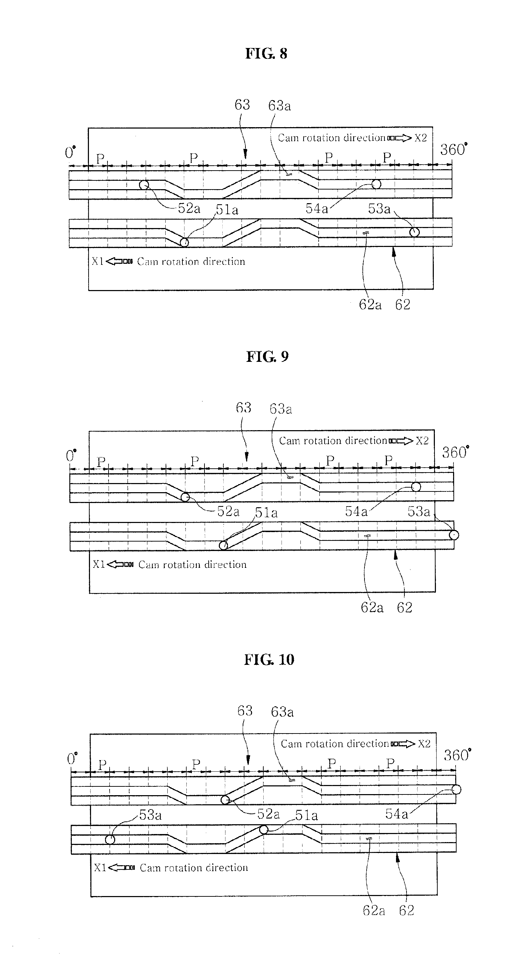

As shown in FIG. 7, the driving waiting state (D-W) is performed before gearshift from the neutral state (N) to speed 1 is performed and thus, is provided to further enhance a transmission time before the gearshift to 1 speed. In the driving waiting state (D-W), the follower pin 51a is transferred to the first inclined channel groove 60b by rotating the first cam member 62 and the second cam member 63 by two pitch distances (P) into an arrow indicator (X1) direction and by shifting the follower pin 51a from the neutral channel groove 60a of the first cam channel 62a. When the follower pin 51a is transferred to the first inclined channel groove 60b, the first synchronizer (S1) is engaged with the first transmission gear (G1) (see FIGS. 3, 6, and 8). Since the first clutch 11 is not connected to the first input shaft 13, the above state is referred to as a waiting state. The remaining follower pins 52a, 53a, and 54a are positioned in the neutral channel groove 60a (see FIG. 8).

As shown in FIGS. 3, 6, and 8, in gearshift to 1 speed, when the first transmission gear (G1) is in the waiting state in the driving waiting state (D-W), rotation force generated from an engine is transferred to the first transmission gear (G1) through the first drive gear (D1) by connecting the first clutch 11 and the first input shaft 13. The rotation force transferred to the first transmission gear (G1) is transferred to the first support shaft 15 and thereby output through the output drive gear (OT1). When switching to the first clutch 11 is performed, the first cam member 62a of the first cam member 62 and the second cam channel 63a of the second cam member 63 are rotated into the arrow indicator (X1) direction by two pitch distances (P). When the first cam channel 62a and the second cam channel 63a are rotated, the follower pin 51a provided to the first shift fork 51 of the first synchronizer (S1) moves from one end to another opposite end along the first parallel channel groove 60c due to the rotation. As shown in FIG. 9, at the same time, the follower pin 52a provided to the second shift fork 52 of the second synchronizer (S2) reaches one end of the first inclined channel groove 60b that is provided to the second cam channel 63a of the second cam member 63 to thereby enable the second synchronizer (S2) is engaged with the second transmission gear (G2). Here, the second clutch 12 is not connected and thus, the second transmission gear (G2) becomes to be in the waiting state (W). In this state, the remaining follower pins 53a and 54a are positioned in the neutral channel groove 60a (see FIG. 9).

As shown in FIGS. 3, 6, and 9, gearshift to 2 speed releases a connection between the first clutch 11 and the first input shaft 13 and then connects the second clutch 12 and the second input shaft 14, thereby transferring the rotation force generated from the engine to the second transmission gear (G2) of the waiting state. The rotation force transferred to the second transmission gear (G2) is transferred to the first support shaft 15 and thereby output through the output drive gear (OT1). When switching from the first clutch 11 to the second clutch 12 is performed, the first cam member 62 and the second cam member 63 are rotated into the arrow indicator (X1) direction by two pitch distances (P). When the first cam channel 62a and the second cam channel 63a are rotated by rotation of the first cam member 62 and the second cam member 63, the follower pin 52a provided to the second shift fork 52 of the second synchronizer (S2) moves along the first parallel channel groove 60c due to the above rotation. At the same time, the follower pin 51a provided to the first shift fork 51 of the first synchronizer (S1) moves along the first shift channel groove 60d to thereby enable the first synchronizer (S1) to be engaged with the third transmission gear (G3) and thereby be in the waiting state. The remaining follower pins 53a and 54a are positioned in the neutral channel groove 60a (see FIG. 10).

As shown in FIGS. 3, 6, and 10, gearshift to 3 speed releases the connection between the second clutch 12 and the second input shaft 14 and then connects the first clutch 11 and the first input shaft 13, thereby transferring the rotation force generated from the engine (not shown) to the third transmission gear (G3) of the waiting state (W). The rotation force transferred to the third transmission gear (G3) is transferred to the first support shaft 15 and thereby output through the output drive gear (OT1). When switching from the second clutch 12 to the first clutch 11 is performed, the first cam channel 62a and the second cam channel 63a are rotated into the arrow indicator (X1) direction by rotating the first cam member 62 and the second cam member 63 by two pitch distances (P).

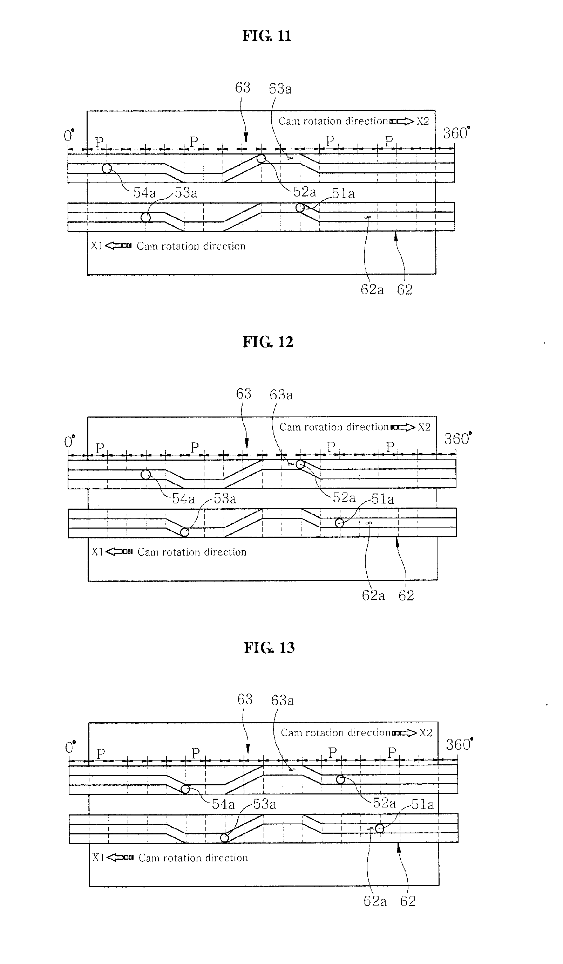

When the first cam channel 62a and the second cam channel 63a are rotated by rotation of the first cam member 62 and the second cam member 63, the follower pin 51a provided to the first shift fork 51 of the first synchronizer (S1) moves along the second parallel channel groove 60e due to the above rotation. At the same time, the follower pin 52a provided to the second shift fork 52 of the second synchronizer (S2) moves along the first shift channel groove 60d to thereby enable the second synchronizer (S2) to be engaged with the fourth transmission gear (G4) and thereby be in the waiting state (W). The remaining follower pins 53a and 54a are positioned in the neutral channel groove 60a (see FIG. 11).

As shown in FIGS. 3, 6, and 11, gearshift to 4 speed releases the connection between the first clutch 11 and the first input shaft 13 and then connects the second clutch 12 and the second input shaft 14, thereby transferring the rotation force generated from the engine to the fourth transmission gear (G4) of the waiting state (W). The rotation force transferred to the fourth transmission gear (G4) is transferred to the first support shaft 15 and thereby output through the output drive gear (OT1). When switching from the first clutch 11 to the second clutch 12 is performed, the first cam member 62 and the second cam member 63 are rotated into the arrow indicator (X1) direction by two pitch distances (P). When the first cam channel 62a and the second cam channel 63a are rotated by rotation of the first cam member 62 and the second cam member 63, the follower pin 52a provided to the second shift fork 52 of the second synchronizer (S2) moves along the first parallel channel groove 60c due to the above rotation. At the same time, the follower pin 53a provided to the third shift fork 51 of the third synchronizer (S3) moves along the first inclined channel groove 60b to thereby enable the third synchronizer (S3) to be engaged with the fifth transmission gear (G5) and thereby be in the waiting state. The remaining follower pins 51a and 54a are positioned in the neutral channel groove 60a (see FIG. 12).

As shown in FIGS. 3, 6, and 12, gearshift to 5 speed releases the connection between the second clutch 12 and the second input shaft 14 and then connects the first clutch 11 and the first input shaft 13, thereby transferring the rotation force generated from the engine (not shown) to the fifth transmission gear (G5) of the waiting state (W). The rotation force transferred to the fifth transmission gear (G5) is transferred to the second support shaft 16 and thereby output through the output drive gear (OT1). When switching from the second clutch 12 to the first clutch 11 is performed, the first cam member 62 and the second cam member 63 are rotated into arrow indicator (X1) direction by two pitch distances (P). When the first cam channel 62a and the second cam channel 63a are rotated by rotation of the first cam member 62 and the second cam member 63, the follower pin 53a provided to the third shift fork 53 of the third synchronizer (S3) moves along the first parallel channel groove 60c due to the above rotation. At the same time, the follower pin 54a provided to the fourth shift fork 54 of the fourth synchronizer (S4) moves along fourth synchronizer (S4) the first inclined channel groove 60b to thereby enable the second synchronizer (S2) to be engaged with the sixth transmission gear (G6) and thereby be in the waiting state (W). The remaining follower pins 51a and 52a are positioned in the neutral channel groove 60a (see FIG. 13).

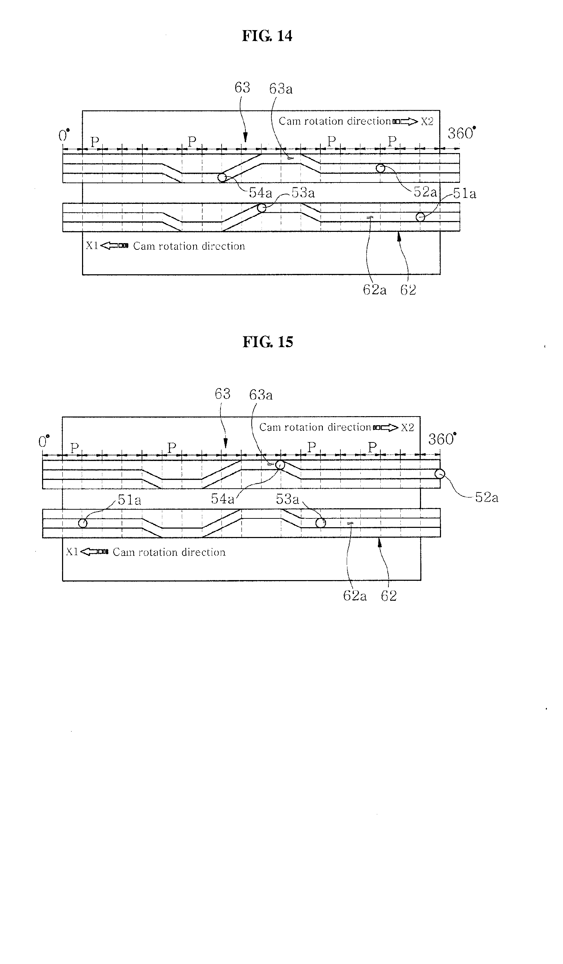

As shown in FIGS. 3, 6, and 13, gearshift to 6 speed releases the connection first clutch 11 and the first input shaft 13 and then connects the second clutch 12 and the second input shaft 14, thereby transferring the rotation force generated from the engine to the sixth transmission gear (G6) of the waiting state (W). The rotation force transferred to the sixth transmission gear (G6) is transferred to the second support shaft 16 and thereby output through the output drive gear (OT2). When switching from the first clutch 11 to the second clutch 12 is performed, the first cam member 62 and the second cam member 63 are rotated into the arrow indicator (X1) direction by two pitch distances (P). When the first cam channel 62a and the second cam channel 63a are rotated by rotation of the first cam member 62 and the second cam member 63, the follower pin 54a provided to the fourth shift fork 54 of the fourth synchronizer (S4) moves along the second parallel channel groove 60e. At the same time, the follower pin 53a provided to the third shift fork 53 of the third synchronizer S3 moves along the first shift channel groove 60d to enable the third synchronizer (S3) to be engaged with the seventh transmission gear (G7) and thereby be in the waiting state (W). The remaining follower pins 51a and 52a are positioned in the neutral channel groove 60a (see FIG. 14).

As shown in FIGS. 3, 6, and 14, gearshift to 7 speed releases the connection between the second clutch 12 and the second input shaft 14 and then connects the first clutch 11 and the first input shaft 13, thereby transferring rotation force generated from the engine to the seventh transmission gear (G7) of the waiting state (W). The rotation force transferred to the seventh transmission gear (G7) is transferred to the second support shaft 16 and thereby output through the output drive gear (OT2).

As shown in FIGS. 3, 6, and 7, reverse gearshift connects the follower pin 54a provided to the fourth shift fork 54 of the fourth synchronizer (S4) to a reverse transmission gear (GR) by rotating the first cam member 62 and the second cam member 63 of the neutral state (N) into a deceleration direction by two pitch distances (P), that is, the arrow indicator (X2) direction. For reference, FIG. 15 shows a state in which the reverse gearshift is completed.

Gearshift from 7 speed to 1 speed is performed by rotating the first cam member 62 and the second cam member 63 into the arrow indicator (X2) direction.

Meanwhile, similar to the aforementioned embodiment, a gearshift of a shifting apparatus of a dual clutch transmission according to another embodiment of the present invention includes a neutral (N), a driving waiting state (D-W), 1 speed to 7 speed, and reverse

(R).

In a gear arrangement view of the dual clutch transmission according to another embodiment of the present invention, a position of a transmission gear is changed from the aforementioned embodiment. In the aforementioned embodiment, the first transmission gear (G1), the third transmission gear (G3), the second transmission gear (G2), and the fourth transmission gear (G4) are mounted to the first support shaft 20, and the fifth transmission gear (G5), the seventh transmission gear (G7), the sixth transmission gear (G6), and the reverse transmission gear (GR) are mounted to the second support shaft 16. In another embodiment of the present invention, the first transmission gear (G1), the third transmission gear (G3), the fourth transmission gear (G4), and the second transmission gear (G2) are mounted to the first support shaft 215, and the seventh transmission gear (G7), the fifth transmission gear (G5), the sixth transmission gear (G6), and the reverse transmission gear (GR) are mounted to the second support shaft 216. Accordingly, a description related to the gear arrangement may refer to the aforementioned embodiment and thus, a further detailed description related thereto will be omitted here.

Also, as shown in FIGS. 17 and 18, in positions of synchronizers according to another embodiment of the present invention, the first cam channel 272 is connected with the first synchronizer (S1) that is disposed between the first transmission gear (G1) and the third transmission gear (G3), and the fourth synchronizer (S4) that is disposed between the sixth transmission gear (G6) and the reverse transmission gear (GR), and the second cam channel 274 is connected with the second synchronizer (S2) that is disposed between the second transmission gear (G2) and the fourth transmission gear (G4), and the third synchronizer (S3) that is disposed between the fifth transmission gear (G5) and the seventh transmission gear (G7). Accordingly, a description related thereto may also be understood from the aforementioned embodiment and thus, a further detailed description related thereto will be omitted here.

Meanwhile, according to another embodiment of the present invention, as shown in FIG. 19, the cylindrical cam member 262 enables different two shift forks, for example, the follower pins 251a and 254a of the first and fourth shift fork 251 and 254 of the first and fourth synchronizers (S1, S4) to be inserted into the first cam channel 272, and enables another two shift forks, for example, the follower pin 252a and 253a of the second and third shift forks 252 and 253 of the second and third synchronizers (S2, S3)to be inserted into the second cam channel 274 and thus, it is possible to reduce the size of the shifting apparatus of the dual clutch transmission.

A plurality of polygonal holes 264 formed on the periphery of the through hole 264 of the cylindrical cam member 262 may decrease magnitude of stress loaded to the follower pin 251a, 252a, 253a, 254a in rotation of the cylindrical cam member 262. Due to the through hole 264, weight of the cylindrical cam member 262 decreases and thus, rotation of the cylindrical cam member 262 may become easy whereby it is possible to decrease load of the rotary driving source 65.

Hereinafter, timing charts showing gearshift for each step of the shifting apparatus of the dual clutch transmission according to another embodiment of the present invention will be described.

As shown in FIG. 20, in the neutral (N), the follower pins 251a, 252a, 253a, and 254a of the first through fourth shift fork 251, 252, 253, and 254, provided to the first through fourth synchronizers (S1, S2, S3, S4), respectively, are shifted to the neutral channel grooves 260a and 360a of the first and second cam channels 272 and 274 whereby all of the) first through seventh transmission gears (G1, G2, G3, G4, G5, G6, G7) and the reverse transmission gear (GR) become to be in the neutral state.

As shown in FIG. 20, the driving waiting state (D-W) is performed before gearshift from the neutral state (N) to 1 speed is performed and thus, is to further enhance a transmission time before the gearshift to 1 speed is performed. The driving waiting state rotates the cylindrical cam member 262 of the neutral state into the arrow indicator (X1) direction by two pitch distances (P) and thereby shifts the follower pin 251a from the neutral channel groove 260a of the first cam channel 272 to the first inclined channel groove 260b. When the follower pin 251a is transferred to the first inclined channel groove 260b, the first synchronizer (S1) is engaged with the first transmission gear (G1) through the above transfer (see FIGS. 17, 18, and 21). In this state, the first clutch 211 is not connected to the first input shaft 213 and thus, the state is referred to as the waiting state. The remaining follower pins 252a, 253a, and 254a are positioned in the neutral channel grooves 360a and 260a (see FIG. 21).

In the driving waiting state (D-W) as shown in FIG. 21, when the first transmission gear (G1) is in a waiting state, gearshift to 1 speed connects the first clutch 211 and the first input shaft 213 and thereby transfer rotation force generated from an engine (not shown) to the first transmission gear (G1) through the first drive gear (D1). The rotation force transferred to the first transmission gear (G1) is transferred to the first support shaft 215 and thereby output through the output drive gear (OT10).

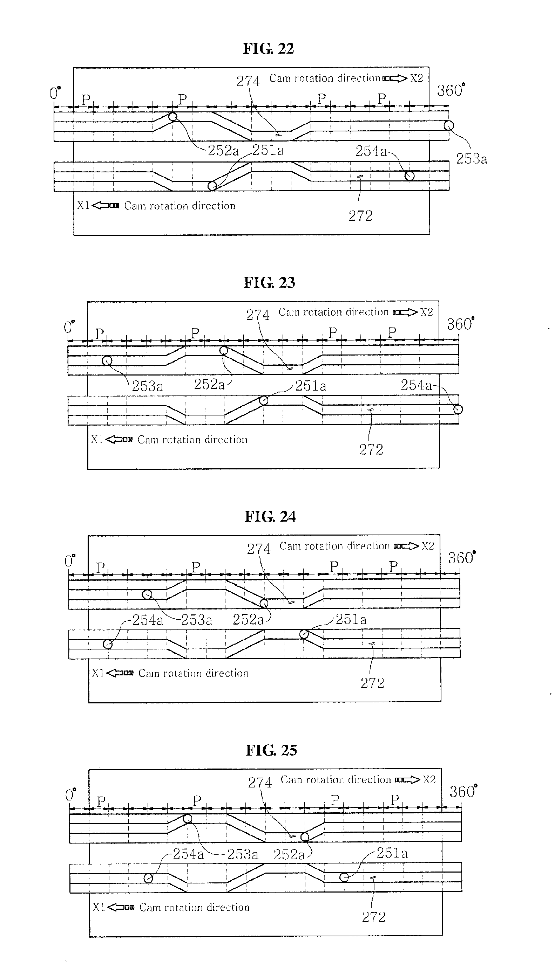

When switching to the first clutch 211 is performed, the first and second cam channels 272 and 274 of the cylindrical cam member 262 are rotated into the arrow indicator (X1) direction by two pitch distances (P). Due to rotation of the first and second cam channels 272 and 274, the follower pin 251a provided to the first shift fork 251 of the first synchronizer (S1) moves from one end to another opposite end along the first parallel channel groove 260c. The follower pin 252a provided to the second shift fork 252 of the second synchronizer (S2) reaches the first shift channel groove 360b whereby the second synchronizer (S2) is engaged with the second transmission gear (G2). Here, the second clutch 212 is not connected and thus, the second transmission gear (G2) becomes to be in the waiting state (W). In this state, the remaining follower pins 253a and 254a are positioned in the neutral channel grooves 360a and 260a (see FIG. 22).

As shown in FIGS. 16, 18, and 22, gearshift to 2 speed releases the connection between the first clutch 211 and the first input shaft 213 and the connects the second clutch 212 and the second input shaft 214, thereby transferring the rotation force generated from the engine (not shown) to the second transmission gear (G2) of the waiting state (W) through the second drive gear (D2). The rotation force transferred to the second transmission gear (G2) is transferred to the first support shaft 215 and thereby output through the output drive gear (OT10).

When switching from the first clutch 211 to the second clutch 212 is performed, the first and second cam channels 272 and 274 are rotated into the arrow indicator (X1) direction by two pitch distances (P).

When the first and second cam channels 272 and 274 are rotated, the follower pin 252a provided to the second shift fork 252 of the second synchronizer (S2) moves from one end to another opposite end along the first parallel channel groove 360c due to the above rotation. At the same time, the follower pin 251a provided to the first shift fork 251 of the synchronizer (S1) enables the first synchronizer (S1) to be engaged with the third transmission gear (G3) and thereby be in the waiting state (W). The remaining follower pins 253a and 254a are positioned in the neutral channel grooves 360a and 260a (see FIG. 23).

As shown in FIGS. 17, 19, and 23, gearshift to 3 speed releases the connection between the second clutch 212 and the second input shaft 214 and then connects the first clutch 211 and the first input shaft 213, thereby transferring the rotation force generated from the engine (not shown) to the drive gear (D3) and thereby transferring the rotation force to the third transmission gear (G3) of the waiting state (W). The rotation force transferred to the third transmission gear (G3) is transferred to the first support shaft 215 and thereby output through the output drive gear (OT10).

When switching from the second clutch 212 to the first clutch 211 is performed, the first and second cam channels 272 and 274 are rotated into the arrow indicator (X1) direction by two pitch distances (P).

When the first and second cam channels 272 and 274 are rotated, the follower pin 251a provided to the first shift fork 251 of the first synchronizer S1 moves along the second parallel channel groove 260e due to the above rotation. At the same time, the follower pin 252a provided to the second shift fork 252 of the second synchronizer (S2) moves along the first inclined channel groove 360d. The remaining follower pins 253a and 254a are positioned in the neutral channel grooves 360a and 260a (see FIG. 24).

As shown in FIGS. 16, 18, and 24, gearshift to 4 speed releases the connection between the first clutch 211 and the first input shaft 213 and then connects the second clutch 212 and the second input shaft 214, thereby transferring the rotation force generated from the engine to the drive gear (D4) and thereby transfer the same to the fourth transmission gear (G4) of the waiting state (W). The rotation force transferred to the fourth transmission gear (G4) is transferred to the first support shaft 215 and thereby output through the output drive gear (OT10).

When switching from the first clutch 211 to the second clutch 212 is performed, the first and second cam channels 272 and 274 are rotated into the arrow indicator (X1) direction by two pitch distances (P). Through this, while maintaining the connection of the fourth transmission gear (G4), the fifth transmission gear (G5) is positioned to be in the waiting state (W).

When the first and second cam channels 272 and 274 are rotated, the follower pin 252a provided to the second shift fork 252 of the second synchronizer (S2) moves along the second parallel channel groove 360e due to the above rotation. At the same time, the follower pin 253a provided to the third shift fork 253 of the third synchronizer (S3) enables the third synchronizer (S3) to be engaged with the fifth transmission gear (G5) along the first shift channel groove 360b and thereby be in the waiting state (W). The remaining follower pins 251a and 254a are positioned in the neutral channel groove 260a (see FIG. 25).

As shown in FIGS. 16, 18, and 25, gearshift to 5 speed releases the connection between the second clutch 212 and the second input shaft 214 and then connects the first clutch 211 and the first input shaft 213, thereby transferring the rotation force generated from the engine to the drive gear (D5) and thereby transfer the same to the fifth transmission gear (G5) of the waiting state (W). The rotation force transferred to the fifth transmission gear (G5) is transferred to the second support shaft 216 and thereby output through the output drive gear (OT20). When switching from the second clutch 212 to the first clutch 211 is performed, the first and second cam channels 272 and 274 are rotated into the arrow indicator (X1) direction by two pitch distances (P).

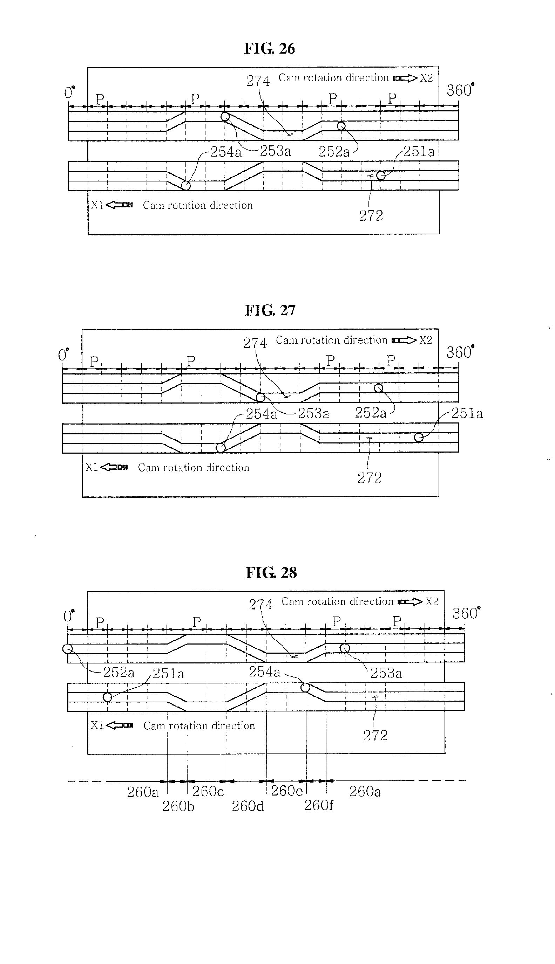

When the first and second cam channels 272 and 274 are rotated, the follower pin 253a provided to the third shift fork 253 of the third synchronizer (S3) moves along the first parallel channel groove 360c. At the same time, the follower pin 254a provided to the fourth shift fork 254 of the fourth synchronizer (S4) moves along the first inclined channel groove 260b to thereby enable the fourth synchronizer (S4) to be engaged with the sixth transmission gear (G6) and to be in the waiting state (W). The remaining follower pins 251a and 252a are positioned in the neutral channel grooves 260a and 360a (see FIG. 26).

As shown in FIGS. 16, 18, and 26, gearshift to 6 speed releases the connection between the first clutch 211 and the first input shaft 213 and then connects the second clutch 212 and second input shaft 214, thereby transferring the rotation force generated from the engine to the rotation force drive gear (D6) and thereby transfer the same to the sixth transmission gear (G6) of the waiting state (W). The rotation force transferred to the sixth transmission gear (G6) is transferred to the second support shaft 216 and thereby output through the output drive gear (OT20).

When switching from the first clutch 211 to the second clutch 212 is performed, the cylindrical cam member 262 is rotated into the arrow indicator (X1) direction by two pitch distances (P). When the first and second cam channels 272 and 274 of the cylindrical cam member 262 are rotated, the follower pin 254a provided to the fourth shift fork 254 of the fourth synchronizer (S4) moves along the first parallel channel groove 260c due to the above rotation. At the same time, the follower pin 253a provided to the third shift fork 253 of the third synchronizer (S3) enables the third synchronizer S3 to be engaged with the seventh transmission gear (G7) along the first inclined channel groove 360d and thereby be in the waiting state (W). The remaining follower pins 251a and 252a are positioned in the neutral channel grooves 260a and 360a (see FIG. 27).

As shown in FIGS. 16, 18, and 27, gearshift to 7 speed releases the connection between the second clutch 212 and the second input shaft 214 and then connects the first clutch 211 and the first input shaft 213, thereby transferring the rotation force generated from the engine to the seventh transmission gear (G7) of the waiting state (W). The rotation force transferred to the seventh transmission gear (G7) is transferred to the second support shaft 216 and thereby output through the output drive gear (OT20).

As shown in FIGS. 16, 18, and 28, in the reverse gearshift, the follower pin 254a provided to the fourth shift fork 254 of the fourth synchronizer (S4) is connected to the reverse transmission gear (GR) through the second inclined channel groove 260f of the first cam channel 272 by rotating the first and second cam channels 272 and 274 of the cylindrical cam member 262 of the neutral state (N) into a deceleration direction by two pitch distances (P), that is, the arrow indicator (X2) direction. For reference, FIG. 28 shows a state in which the reverse gearshift is completed.

Gearshift from 7 speed to 1 speed is performed by rotating the cylindrical cam member 262 into the arrow indicator (X2) direction.

As described above, in a shifting apparatus of a dual clutch transmission according to embodiments of the present invention, a first cam member formed with a first cam channel and a second cam member formed with a second cam channel are separately formed in a hollow cylindrical member by a predetermined distance. Accordingly, it is possible to enhance durability of a product and reliability of an operation when performing a shift control.

Also, in a shifting apparatus of a dual clutch transmission according to embodiments of the present invention, by providing a first cam channel and a second cam channel, it is possible to readily change installation positions of shift forks. Accordingly, the shifting apparatus may be readily manufactured.

Also, in a shifting apparatus of a dual clutch transmission according to embodiments of the present invention, follower pins of two different shift forks may be inserted into each of first and second cam channels and thus, it is possible to reduce the size. Also, due to a plurality of polygonal holes formed on both sides of a cylindrical cam member, it is possible to decrease magnitude of stress loaded to follower pins in rotation of the cam. Accordingly, it is possible to guarantee the smooth rotation of the cam and to decrease load of a motor.

A shifting apparatus of a dual clutch transmission according to the present invention may be applicable to an automobile manufacturing field.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A shifting apparatus of a dual clutch transmission, comprising:
a plurality of drive gears inserted into a first input shaft or a second input shaft of dual clutches;
a plurality of transmission gears synchronized with the drive gears, respectively, and each inserted into a first support shaft or a second support shaft;
a plurality of synchronizers positioned between the transmission gears, and each slidably inserted into the first support shaft or the second support shaft;
a plurality of shift forks connected to the synchronizers, respectively, and each having a follower pin; and
a dual cam mechanism comprising a rotation shaft, first and second cam members inserted into the rotation shaft and in which first and second cam channels are formed respectively, and a single driving source rotating the first and second cam channels into two directions.

2. The shifting apparatus of claim 1, wherein each of the first and second cam members of the dual cam mechanism comprises:
a first hollow ring member inserted into a hollow cylindrical member;
a second hollow ring member inserted into the hollow cylindrical member to be spaced apart from the first hollow ring member, and formed with the first cam channel or the second cam channel, and
each of the first and second hollow ring members is combined with the hollow cylindrical member by welding.

3. The shifting apparatus of claim 2, wherein each of the first and second hollow ring members comprises:
a first inclined surface portion inclined into a first inclined direction;
a first horizontal surface portion formed on the first inclined surface portion to be extended into a horizontal direction;
a second inclined surface portion formed on the first horizontal surface portion to be extended into a second inclined direction opposite to the first inclined direction;
a second horizontal surface portion formed on the second inclined surface portion to be extended into the horizontal direction;
a third inclined surface portion formed on the second horizontal surface portion to be extended into the first inclined direction; and
a third horizontal surface portion formed between the third inclined surface portion and the first inclined surface portion, and
the first inclined surface portion and the third inclined surface portion have the identical length, and the second inclined surface portion is formed to have a length longer than the first inclined surface portion or the third inclined surface portion.

4. The shifting apparatus of claim 1, wherein each of the first and second cam members of the dual cam mechanism is dived into a plurality of pitch distances having the same interval, and rotates at pitch distances by a driving source to shift follower pins of the plurality of shift forks, thereby enabling the synchronizers to be selectively engaged with the transmission gears, respectively.

5. The shifting apparatus of claim 4, wherein the plurality of pitch distances of each of the first and second cam members is obtained by dividing the periphery of the first cam ember or the second cam member so that an angle of arc becomes 18 degrees based on a rotation center shaft.

6. The shifting apparatus of claim 1, wherein each of the first and second cam channels of first and second cam members of the dual cam mechanism comprises:
a neutral channel groove;
a first inclined channel groove extended from the neutral channel groove;
a first parallel channel groove extended from the first inclined channel groove;
a first shift channel groove extended from the first parallel channel groove;
a second parallel channel groove extended from the first shift channel groove; and
a second inclined channel groove extended from the second parallel channel groove.

7. The shifting apparatus of claim 1, wherein, in each of the first and second cam channels of first and second cam members of the dual cam mechanism, the neutral channel groove is formed to have 12 pitch distances, each of the first inclined channel groove and the second inclined channel groove is formed to have a single pitch distance, and each of the first shift channel groove and the first and second parallel channel grooves is formed to have two pitch distances.

8. A shifting apparatus of a dual clutch transmission, comprising:
one or more transmission pairs spaced apart from each other, and a synchronizer disposed between the one or more transmission gear pairs;
at least one shift fork, each having a follower pin;
a cylindrical cam member having two cam channels, each receiving at least one follower pin of the shift fork; and
a drive member bi-directionally rotating the cylindrical cam member,
wherein two cam channels formed on the cylindrical cam member are symmetrically disposed to face each other, and have the same pitch distance.

9. The shifting apparatus of claim 8, wherein the cylindrical cam member comprises a through hole formed to insert a rotation shaft into the center thereof, and a plurality of polygonal holes formed at predetermined intervals on the periphery of the through hole.

10. The shifting apparatus of claim 8, wherein at least one pin hole for zero-adjustment of a rotation shaft is formed on the periphery of the cylindrical cam member, and a pin is inserted into the pin hole.

11. The shifting apparatus of claim 8, wherein follower pins of different shift forks are inserted into two cam channels of the cylindrical cam member to be the same number.

12. The shifting apparatus of claim 8, wherein follower pins of different shift forks are inserted into two cam channels of the cylindrical cam member to be a different number.

13. A shifting apparatus of a dual clutch transmission, comprising:
one or more transmission pairs spaced apart from each other, and a synchronizer disposed between the one or more transmission gear pairs;
at least one shift fork, each having a follower pin;
a cylindrical cam member inserted into a rotation shaft and having at least one cam channel, each receiving at least one follower pin of the shift fork; and
a single drive member bi-directionally rotating the cylindrical cam member,
wherein first and second cam channels formed on the cylindrical cam member are disposed at an estimated interval.

14. The shifting apparatus of claim 13, wherein the first cam channel of the cylindrical cam member comprises:
a neutral channel groove;
a first inclined channel groove extended from the neutral channel groove;
a first parallel channel groove extended from the first inclined channel groove;
a first shift channel groove extended from the first parallel channel groove;
a second parallel channel groove extended from the first shift channel groove; and
a second inclined channel groove extended from the second parallel channel groove, and
the second cam channel of the cylindrical cam member comprises a neutral channel groove;
a first shift channel groove extended from the neutral channel groove;
a first parallel channel groove extended from the first shift channel groove;
a first inclined channel groove extended from the first parallel channel groove;
a second parallel channel groove extended from the first inclined channel groove; and
a second shift channel groove extended from the second parallel channel groove.

15. The shifting apparatus of claim 13, wherein, in the first cam channel of the cylindrical cam member, the neutral channel groove is formed to have 12 pitch distances, each of the first inclined channel groove and the second inclined channel groove is formed to have a single pitch distance, and each of the first shift channel groove and the first and second parallel channel grooves is formed to have two pitch distances.

16. The shifting apparatus of claim 13, wherein, in the second cam channel of the cylindrical cam member, the neutral channel groove is formed to have 12 pitch distances, each of the first shift channel groove and the second shift channel groove is formed to have a single pitch distance, and each of the first inclined channel groove and the first and second parallel channel grooves is formed to have two pitch distances.
